(19) Europäisches Patentamt
European Patent Office
Office européen des brevets

(11) **EP 3 722 994 A1**

(12) **EUROPÄISCHE PATENTANMELDUNG**

(43) Veröffentlichungstag:
**14.10.2020 Patentblatt 2020/42**

(51) Int Cl.:
*G06K 9/00* (2006.01)    *B60W 30/08* (2012.01)
*B60W 30/095* (2012.01)    *G08G 1/16* (2006.01)

(21) Anmeldenummer: **20166010.7**

(22) Anmeldetag: **26.03.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **08.04.2019 DE 102019205017**

(71) Anmelder: **ZF Friedrichshafen AG**
**88046 Friedrichshafen (DE)**

(72) Erfinder:
• **Metzner, Jannik**
 **88046 Friedrichshafen (DE)**
• **Fafula, Daniel**
 **88046 Friedrichshafen (DE)**
• **Maile, Florian**
 **88048 Friedrichshafen (DE)**

(74) Vertreter: **ZF Friedrichshafen AG**
**Gewerblicher Rechtsschutz**
**Löwentalerstraße 20**
**88046 Friedrichshafen (DE)**

(54) **INTENTIONSBESTIMMUNG EINES PERSONENVERKEHRSMITTELS**

(57) Ein Verfahren (200) zum Steuern eines Kraftfahrzeugs (105) umfasst Schritte des Abtastens (205) einer Umgebung des Kraftfahrzeugs (105); des Erfassens (210) eines vor dem Kraftfahrzeug (105) haltenden Personenverkehrsmittels (110); des Erfassens (225) einer Bewegung wenigstens einer Person im Bereich des Personenverkehrsmittels (110); und des Bestimmens (240) einer Wahrscheinlichkeit, mit der das Personenverkehrsmittel (110) vor dem Kraftfahrzeug (105) einschert, auf der Basis der Bewegung der Person.

Fig. 1

EP 3 722 994 A1

**Beschreibung**

Die vorliegende Erfindung betrifft die Steuerung eines Kraftfahrzeugs. Insbesondere betrifft die Erfindung die Bestimmung eines vor dem Kraftfahrzeug einscherenden Personenverkehrsmittels.

Insbesondere im städtischen Umfeld kann ein Verkehrsmittel des öffentlichen Personennahverkehrs (ÖPNV) das gleiche Straßennetz wie ein individuelles Kraftfahrzeug benutzen. Beispielsweise kann ein Linienbus auf einer gewöhnlichen Fahrstraße fahren und an vorbestimmten Haltestellen anhalten, um Fahrgäste ein- und aussteigen zu lassen. Beim Losfahren kann der Linienbus einen besonderen Vorrang vor dem übrigen Verkehr haben, um ihm die Einhaltung eines Fahrplans zu erleichtern. Es ist üblich, dass ein Linienbus forsch in den fließenden Verkehr einfährt. Ein unaufmerksamer Fahrer eines folgenden Kraftfahrzeugs kann dadurch überrascht werden, sodass eine Unfallwahrscheinlichkeit erhöht sein kann.

Es wurde vorgeschlagen, dass der Linienbus ein drahtloses Signal an umliegende Verkehrsteilnehmer aussendet, um seine Intention anzukündigen. Diese Technik wird auch Fahrzeug-zu-Fahrzeug Kommunikation (car-to-car, C2C) genannt und erfordert, dass alle teilnehmenden Verkehrsteilnehmer mit entsprechenden Kommunikationseinrichtungen ausgestattet sind.

Eine der vorliegenden Erfindung zu Grunde liegende Aufgabe besteht in der Angabe einer verbesserten Technik zur Bestimmung einer Losfahrintention eines haltenden Personenverkehrsmittels.

Die Erfindung löst diese Aufgabe mittels der Gegenstände der unabhängigen Ansprüche. Unteransprüche geben bevorzugte Ausführungsformen wieder.

Ein Verfahren zum Steuern eines Kraftfahrzeugs umfasst Schritte des Abtastens einer Umgebung des Kraftfahrzeugs; des Erfassens eines vor dem Kraftfahrzeug haltenden Personenverkehrsmittels; des Erfassens einer Bewegung wenigstens einer Person im Bereich des Personenverkehrsmittels; und des Bestimmens einer Wahrscheinlichkeit, mit der das Personenverkehrsmittel vor dem Kraftfahrzeug einschert, auf der Basis der Bewegung der Person.

Es wurde erkannt, dass ein Losfahren des Personenverkehrsmittels besonders wahrscheinlich ist, wenn ein Einsteigevorgang oder Aussteigevorgang von Personen gerade beendet ist. Ein bevorstehendes Ende des Vorgangs kann anhand der Bewegung der Person abgeschätzt werden. Das Personenverkehrsmittel kann beispielsweise einen Bus, einen Stadtbus, einen Ortsbus, einen Quertierbus, einen Regionalbus, einen Reisebus, einen Linienbus, eine Straßenbahn, ein Taxi, ein Sammeltaxi oder ein anderes Straßen- oder schienengebundenes Fahrzeug betreffen, das zur Beförderung von Personen eingerichtet ist.

Besonders bevorzugt wird auf der Basis der Bewegung der Person bestimmt, dass die Person ein Fahrgast des Personenverkehrsmittels ist. Als Fahrgast wird hierin eine Person bezeichnet, die in das Personenverkehrsmittel einsteigt (oder einsteigen wird) oder aus ihm aussteigt (oder ausgestiegen ist), während das Personenverkehrsmittel hält. Vorbestimmte maximale Zeitdauern zwischen dem Betrachtungszeitpunkt und dem Ein- oder Aussteigen einer Person können vorbestimmt sein. Anders ausgedrückt kann eine Person, die innerhalb einer ersten vorbestimmten Zeitspanne in das Personenverkehrsmittel einsteigen wird, als Fahrgast betrachtet werden. Ebenso kann eine Person, die innerhalb einer zweiten vorbestimmten Zeitspanne aus dem Personenverkehrsmittel ausgestiegen ist, als Fahrgast gelten.

In einer Ausführungsform werden nur Personen betrachtet, die sich außerhalb des Personenverkehrsmittels befinden, da diese leichter zu erfassen sind. In einer weiteren Ausführungsform können auch Personen betrachtet werden, die sich in dem Personenverkehrsmittel befinden. In diesem Fall können eine Person, die innerhalb einer dritten Zeitspanne aus dem Personenverkehrsmittel aussteigen wird, oder eine Person, die innerhalb einer vierten vorbestimmten Zeitspanne in das Personenverkehrsmittel eingestiegen ist, als Fahrgäste betrachtet werden.

Weiter bevorzugt wird auf der Basis der Bewegung des Fahrgasts bestimmt, ob der Fahrgast in das Personenverkehrsmittel zusteigt oder aus dem Personenverkehrsmittel aussteigt. Dabei wird die Wahrscheinlichkeit bevorzugt auf der Basis dieser Information bestimmt. Durch die Unterscheidung zwischen einem aussteigenden und einem einsteigenden Fahrgast kann ein bevorstehendes Losfahren verbessert bestimmt werden. Beispielsweise kann das Personenverkehrsmittel zum Zeitpunkt des Erfassens eines Fahrgastes, der gerade ausgestiegen ist, losfahren. Andererseits kann zum Zeitpunkt des Erfassens eines einsteigewilligen Fahrgastes üblicherweise kein Losfahren anzunehmen sein.

Die Wahrscheinlichkeit des Losfahrens kann auf der Basis der mittleren Bewegung einer Gruppe zusteigender oder aussteigender Fahrgäste bestimmt werden. Die Bewegung der Gruppe kann verbessert bestimmt werden, auch wenn zwischenzeitlich nur ein Teil der von der Gruppe umfassten Personen erfasst werden kann. Dies kann insbesondere bei einer einsteigenden Gruppe von Personen eine verbesserte Bestimmung erlauben.

Die Wahrscheinlichkeit kann auf der Basis von Bewegungen einer aussteigenden und einer zusteigenden Gruppe bestimmt werden. Dabei kann berücksichtigt werden, dass üblicherweise zuerst Personen aus dem Personenverkehrsmittel aussteigen und dann erst andere Personen einsteigen. Die Bewegungen der Gruppen oder die Bewegung einer Person der einen Gruppe bezüglich der anderen Gruppe können so verbessert vorhergesagt werden.

Die Wahrscheinlichkeit kann auf der Basis einer Anzahl der von der Gruppe umfassten Personen bestimmt werden. Dadurch kann berücksichtigt werden, wie dass das Bewegungsverhalten einer Gruppe von ihrer Größe abhängig sein kann. Auch eine Kapazität des Personenverkehrsmittels für Personen kann berücksichtigt werden. Steigt die aktuelle Zahl der an Bord befindlichen Fahrgäste in die Nähe einer vorbestimmten maximalen Zahl, so können ein Aussteigevorgang oder insbesondere ein Einsteigevorgang verlangsamt sein. Eine erwartete Geschwindigkeit eines Aussteigevorgangs kann auch von der Größe der Gruppe einsteigewilliger Personen abhängig sein.

Die Wahrscheinlichkeit kann zusätzlich auf der Basis einer beobachteten Haltedauer des Personenverkehrsmittels bestimmt werden. Dabei kann eine übliche Haltedauer des Personenverkehrsmittels angenommen werden. Je näher die beobachtete Haltedauer an der angenommenen Haltedauer liegt, desto wahrscheinlicher kann das Losfahren sein. Außerdem kann angenommen werden, dass das Losfahren umso forscher ausfallen kann, je länger die tatsächliche Haltedauer gedauert hat.

Es kann bestimmt werden, dass das Personenverkehrsmittel an einer vorbestimmten Haltestelle hält. Dadurch kann das Personenverkehrsmittel genauer klassifiziert werden, beispielsweise als Linienbus oder Straßenbahn, und eine zugeordnete Verhaltensweise kann angenommen werden. Dazu kann das Personenverkehrsmittel auch erkannt werden, um beispielsweise ein Taxi, das an einer Bushaltestelle hält, nicht wie einen Linienbus zu behandeln.

Die Wahrscheinlichkeit kann weiter bezüglich eines vorbestimmten, bevorstehenden Zeitbereichs bestimmt werden. Dieser Zeitbereich kann insbesondere ein geplantes Vorbeifahren des Kraftfahrzeugs am haltenden Personenverkehrsmittel umfassen. Ein früherer oder weiter in der Zukunft liegender Zeitbereich kann für eine Entscheidung, am haltenden Personenverkehrsmittel vorbeizufahren, wenig relevant sein. Anders ausgedrückt kann weniger ein voraussichtlicher Zeitpunkt des Losfahrens als die Wahrscheinlichkeit bestimmt werden, dass innerhalb des vorbestimmten Zeitbereichs ein Losfahren des Personenverkehrsmittels erfolgt.

Sollte die bestimmte Wahrscheinlichkeit einen vorbestimmten Schwellenwert übersteigen, kann ein Signal ausgegeben werden. Das Signal kann an eine Person an Bord des Kraftfahrzeugs, insbesondere einen Fahrer, gerichtet sein und beispielsweise optisch, akustisch oder haptisch dargeboten werden. Das Signal kann auch an eine Steuervorrichtung des Kraftfahrzeugs gerichtet sein, die eine Längs- und/oder Quersteuerung des Kraftfahrzeugs durchführt. Das Signal kann die bestimmte Wahrscheinlichkeit umfassen und bei einer Entscheidungsfindung, am haltenden Personenverkehrsmittel vorbeizufahren, berücksichtigt werden.

Nach einem weiteren Aspekt der Erfindung umfasst eine Vorrichtung zur Steuerung eines Kraftfahrzeugs eine Abtasteinrichtung zur Abtastung einer Umgebung des Kraftfahrzeugs; und eine Verarbeitungseinrichtung. Dabei ist die Verarbeitungseinrichtung dazu eingerichtet, ein vor dem Kraftfahrzeug haltendes Personenverkehrsmittel zu erfassen, eine Bewegung wenigstens einer Person im Bereich des Personenverkehrsmittels zu erfassen, und auf der Basis der Bewegung des Fahrgasts eine Wahrscheinlichkeit zu bestimmen, mit der das Personenverkehrsmittel vor dem Kraftfahrzeug einschert.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Erfindung wird nun mit Bezug auf die beigefügten Figuren genauer beschrieben, in denen:

Figur 1     ein System; und
Figur 2     ein Ablaufdiagramm eines Verfahrens

darstellt.

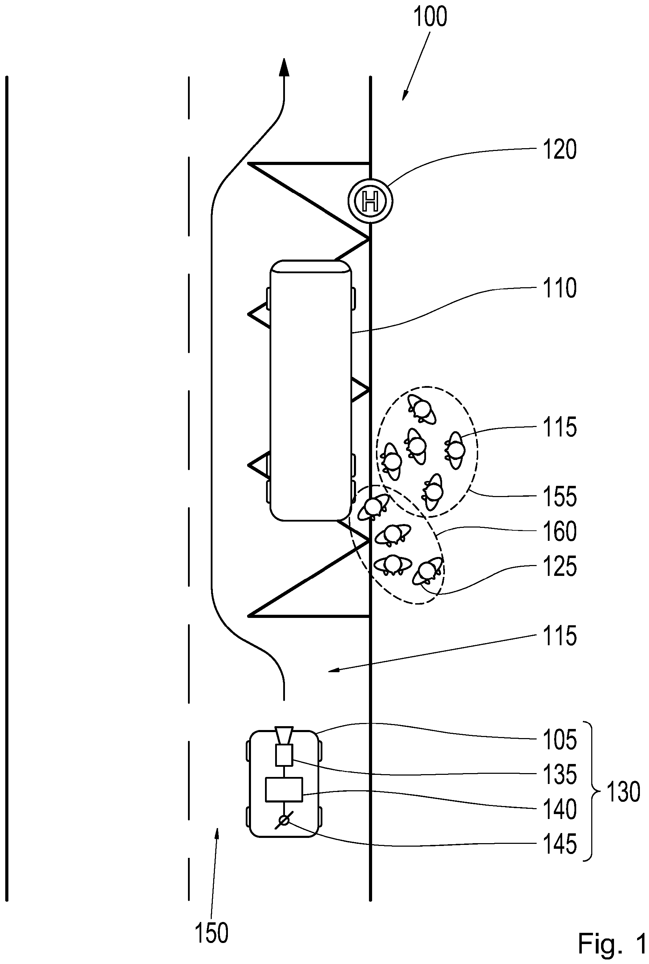

Figur 1 zeigt ein System 100, das ein Kraftfahrzeug 105 und ein Personenverkehrsmittel 110 umfasst, die sich auf einer gemeinsamen Fahrstraße 115 befinden. Beispielhaft umfasst das Personenverkehrsmittel 110 hier einen Bus. Das Personenverkehrsmittel 110 und das Kraftfahrzeug 105 sind in der gleichen Fahrtrichtung unterwegs, wobei das Kraftfahrzeug 105 bevorzugt aktiv am Verkehr teilnimmt, während das Personenverkehrsmittel 110 angehalten hat oder dabei ist, anzuhalten. Bevorzugt hält das Personenverkehrsmittel 110 im Bereich einer Haltestelle 120, die einen Teil einer Fahrspur, die das Kraftfahrzeug 105 benutzen kann, einnehmen kann.

Das Kraftfahrzeug 105 kann beispielsweise einen üblichen Personen- oder Lastkraftwagen oder einen Bus umfassen, der durch einen Fahrer gesteuert sein kann. Das Kraftfahrzeug 105 kann auch ein System zur teilautomatischen, automatischen oder autonomen Steuerung aufweisen.

Das Personenverkehrsmittel 110 hält üblicherweise, um Fahrgäste 125 einsteigen und/oder aussteigen zu lassen. Üblicherweise fährt das Personenverkehrsmittel 110 los, sobald beide Vorgänge abgeschlossen sind. Dabei kann es in einen fließenden Verkehr einscheren, beispielsweise in eine Fahrspur des Kraftfahrzeugs 105, oder vor dem Kraftfahrzeug 105. Sollte das Kraftfahrzeug 105 damit nicht rechnen und beispielsweise planen oder bereits dabei sein, am Personenverkehrsmittel 110 vorbeizufahren, kann eine Kollisionswahrscheinlichkeit erhöht sein.

An Bord des Kraftfahrzeugs 105 ist bevorzugt eine Steuervorrichtung 130 angebracht, die weiter bevorzugt eine Abtasteinrichtung 135, eine Verarbeitungseinrichtung 140 und eine Schnittstelle 145 aufweist. Die Abtasteinrichtung 135 umfasst einen oder mehrere Sensoren zur Abtastung eines Umfelds 150 des Kraftfahrzeugs 105, insbesondere in einem vor dem Kraftfahrzeug 105 liegenden Bereich. Beispielsweise können ein Radarsensor, ein LiDAR-Sensor, eine optische Kamera und/oder eine Tiefenkamera umfasst sein. Messwerte mehrerer Sensoren können miteinander fusioniert werden, um ein Objekt im Umfeld 150 des Kraftfahrzeugs zu erkennen. Insbesondere sollen das Personenverkehrsmittel 110 und eine Person erkannt werden, die weiter bevorzugt ein Fahrgast 125 ist.

Die Verarbeitungseinrichtung 140 ist bevorzugt dazu eingerichtet, die Objekterkennung durchzuführen. Außerdem kann ein erfasstes Objekt über eine vorbestimmte Zeit beobachtet werden, um seine Trajektorie (oder seinen Stillstand) zu bestimmen. Beispielsweise kann eine Person anhand seiner Bewegungen als Fahrgast 125 bestimmt werden. Die Objekterkennung kann auch mittels der Verarbeitungseinrichtung 140 durchgeführt werden.

Ein Fahrgast 125 kann einer ersten Gruppe 155 zugeordnet sein, die einsteigende Fahrgäste 135 umfasst, oder einer zweiten Gruppe 140, die aussteigende Fahrgäste 125 umfasst. Eine Person, die sich im Bereich der Haltestelle 120 aufhält, die sich auf ein näherndes oder angehaltenes Personenverkehrsmittel 110 zu bewegt, die ein Aussteigen anderer Fahrgäste 125 abwartet, oder sich eventuell mit anderen Fahrgästen 125 im Bereich eines Einstiges des Personenverkehrsmittels 110 zusammendrängt, kann der ersten Gruppe 155 zugeordnet werden. Eine Person, die aus dem Personenverkehrsmittel 110 aussteigt, sich gegebenenfalls anschließend von der Haltestelle 120 weg bewegt, etwa die Fahrstraße 115 überquert, kann der zweiten Gruppe 160 zugeordnet sein. Eine Zuordnung einer Person 125 zu einer der Gruppen 155, 160 kann durch die Verarbeitungseinrichtung 140 erfolgen.

Die Schnittstelle 145 ist dazu eingerichtet, ein Signal bereitzustellen, das darauf hinweist, dass das Personenverkehrsmittel 110 im Begriff ist, loszufahren. Genauer kann das Signal darauf hinweisen, dass ein Losfahren des Personenverkehrsmittels 110 innerhalb eines vorbestimmten, bevorstehenden Zeitbereichs wahrscheinlich ist. Der Zeitbereich kann beispielsweise 10, 5, 2 oder 1 Sekunde umfassen und das Signal kann ausgegeben werden, wenn eine bestimmte Wahrscheinlichkeit einen vorbestimmten Schwellenwert übersteigt, beispielsweise 80%, 90%, 95% oder 99%. Unterschiedliche Signale können unterschiedlichen Zeitbereichen zugeordnet sein. Unterschiedlichen Zeitbereichen können unterschiedliche Schwellenwerte zugeordnet sein.

In einer Ausführungsform ist das Signal an einen Fahrer des Kraftfahrzeugs 105 gerichtet und umfasst ein Warnsignal. In einer anderen Ausführungsform, die damit kombiniert werden kann, ist das Signal an einen Fahrassistenten oder ein autonomes Steuersystem des Kraftfahrzeugs 105 gerichtet. In noch einer weiteren Ausführungsform kann das Signal unmittelbar auf einen Aktuator wirken, der eine Längs- und/oder Quersteuerung des Kraftfahrzeugs 105 beeinflusst. Sollte das Losfahren des Personenverkehrsmittels 110 als wahrscheinlich bestimmt werden, kann insbesondere ein geplantes Vorbeifahren am haltenden Personenverkehrsmittel 110 verhindert oder abgebrochen werden oder das Kraftfahrzeug 105 kann dem Personenverkehrsmittel 110 seitlich ausweichen.

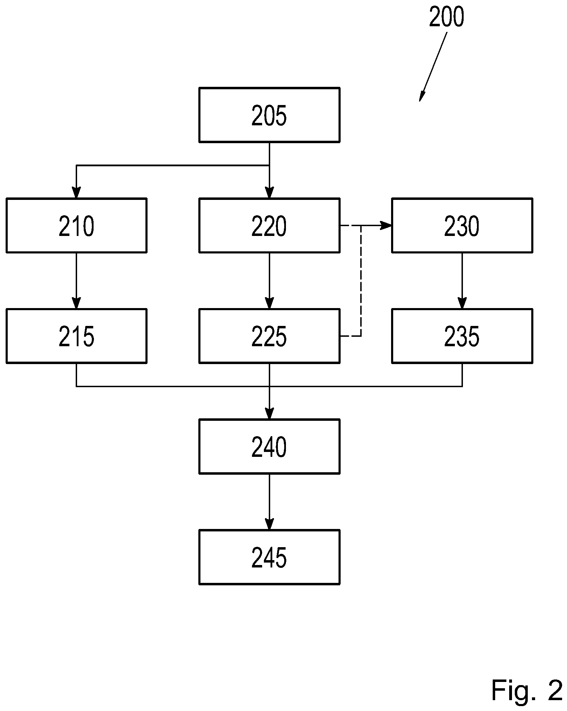

Figur 2 zeigt ein Ablaufdiagramm eines beispielhaften Verfahrens 200, das insbesondere mittels der Steuervorrichtung 130 an Bord eines Kraftfahrzeugs 105 durchgeführt werden kann. In einem ersten Schritt 205 kann das Umfeld 150 des Kraftfahrzeugs 105 abgetastet werden, beispielsweise mittels der Abtasteinrichtung 135. Dabei kann bereits eine im Umfeld 150 liegende Haltestelle 120 bestimmt werden. Die Haltestelle 120 kann auch auf der Basis einer Position des Kraftfahrzeugs 105 und entsprechenden Kartendaten bestimmt werden. Anhand der Abtastung mit der Abtasteinrichtung 135 kann eine solche Bestimmung überprüft werden.

In einem Schritt 210 kann dann das Personenverkehrsmittel 110 erkannt und optional klassifiziert werden, etwa um eine Bauform, eine Beförderungskapazität und/oder Anzahl und Lage von Ein- und/oder Ausgängen zu bestimmen. In einem nachfolgenden Schritt 215 kann eine Bewegung des Personenverkehrsmittels 110, bestimmt werden, insbesondere in Form einer Trajektorie.

In entsprechender Weise können in einem Schritt 220 eine Person im Bereich des Personenverkehrsmittels 110 oder der Haltestelle 120 erfasst und in einem Schritt 225 ihre Bewegung bestimmt werden, bevorzugt in Form einer weiteren Trajektorie. Außerdem kann bestimmt werden, ob es sich bei der Person um einen Fahrgast 125 handelt, insbesondere auf der Basis ihrer Bewegung. Bestimmte Fahrgäste 125 können in zusteigende und aussteigende Fahrgäste 125 unterteilt werden. Eine Person, die weder aussteigt noch zusteigt, kann nicht als Fahrgast 125 angesehen werden. Fahrgäste 125 können weiter klassifiziert werden, um beispielsweise eine Person mit verringerter Bewegungsgeschwindigkeit wie eine ältere Person, eine Person mit Gepäck, einem Kinderwagen oder einen Rollator, eine verletzte oder gebrechliche Person, eine Person mit einem Rollstuhl oder ein Kind zu erkennen. Die Klassifikation kann zur Vorhersage einer Bewegung des Fahrgasts 125 verwendet werden.

Bevorzugt wird ein bestimmter Fahrgast 125, insbesondere auf der Basis ihrer bestimmten Trajektorie, in einem Schritt 230 der ersten Gruppe 155 einsteigender oder der zweiten Gruppe 160 aussteigender Fahrgäste 125 zugeordnet. Beispielsweise aufgrund einer Anzahl umfasster Fahrgäste 125 und/oder geschätzten Bewegungsgeschwindigkeiten der umfassten Fahrgäste 125 kann in einem Schritt 235 eine Bewegung der Gruppe 155, 160 bestimmt werden. Die Bewegung einer Gruppe 155, 160 kann auch vorhergesagt werden. Dabei kann berücksichtigt werden, dass sich die Bewegungen einsteigender und aussteigender Fahrgäste 125 am Personenverkehrsmittel 110 gegenseitig bedingen können, insbesondere wenn keine dedizierten Ein- und Ausstiege vorgesehen sind, sondern ein Einsteigen nach einem Aussteigen an der gleichen Tür erfolgt.

In einem Schritt 240 kann eine Wahrscheinlichkeit bestimmt werden, mit der ein Losfahren des Personenverkehrsmittels 110 innerhalb eines vorbestimmten, bevorstehenden Zeitraums eintritt. Es kann auch bestimmt werden, zu welchem bevorstehenden Zeitpunkt das Losfahren voraussichtlich stattfinden wird. Das Losfahren erfolgt üblicherweise, nachdem Einsteigevorgänge und Aussteigevorgänge an allen Türen des Personenverkehrsmittels 110 abgeschlossen sind. Dabei erfolgt häufig der Einsteigevorgang erst nach dem Aussteigevorgang. Das Ende eines Einsteigevorgangs ist häufig aus der Position des Kraftfahrzeugs 105 schlecht bestimmbar, da die genaue Position eines einsteigenden Fahrgasts 125 wegen ihrer Verdeckung durch das Personenverkehrsmittel 110 nicht bekannt sein kann. Daher kann eine vorhergesagte Bewegung des Fahrgasts 125 oder der ihn umfassenden Gruppe 155 für die Bestimmung verwendet werden. Eine für das Öffnen und/oder Schließen von Türen erforderliche Zeit kann berücksichtigt werden. Weiter kann auch berücksichtigt werden, wie lange das Personenverkehrsmittel 110 bereits angehalten hat, und diese Zeit kann mit einer üblichen oder erwarteten Zeit verglichen werden.

Eine Möglichkeit, die Bestimmung der Wahrscheinlichkeit durchzuführen, kann in Formelschreibweise wie folgt ausgedrückt werden:

$$BDIF = \left(1 - \left(\sum_1^n \sigma_{PE_i} w_{PE} + \sum_1^n \sigma_{PT_i} w_{PT_i} + \sigma_{BT} w_{BT} + \sigma_{BE} w_{BE}\right)\right)(w_t\, t_{stopped})(1 - d_{PB} w_{PB})$$

dabei bedeuten:

BDIE: *Bus Driver Intention Estimation,* die Wahrscheinlichkeit, mit der das Personenverkehrsmittel 110 innerhalb eines betrachteten Zeitraums losfahren wird;
n: Anzahl der Personen / Fahrgäste
PE: *Pedestrian Existance Probability,* die Wahrscheinlichkeit, dass ein erfasster Fahrgast 125 tatsächlich existiert und keine falsch positive Bestimmung ist;
PT: *Pedestrian Trajectory,* die Trajektorie des Fahrgasts 125;
BT: *Bus Trajectory,* die Trajektorie des Personenverkehrsmittels 110;
BE: *Bus Existance Probability,* die Wahrscheinlichkeit, dass ein erfasstes Personenverkehrsmittel 110 tatsächlich existiert und keine falsch positive Bestimmung ist;
t: *time,* die Zeit
PE: *Pedestrian-Bus,* der Abstand zwischen einem betrachteten Fahrgast 125 und dem Personenverkehrsmittel 110;
w: *weight,* ein gewählter Gewichtungsfaktor
σ: *variance,* die Varianz der Bestimmung

Es ist zu beachten, dass nicht alle Bestandteile des angegebenen Terms zur Bestimmung der BDIF berücksichtigt werden müssen. Die Wahrscheinlichkeiten der Existenz eines Fahrgasts 125 bzw. des Personenverkehrsmittel 110 modellieren bevorzugt Mess- oder Sensorfehler. Insbesondere bei der Verwendung eines Radarsensors kann, beispielsweise aufgrund von Signalreflektion, ein Objekt bestimmt werden, wenn sich tatsächlich keines an der bestimmten Stelle befindet. In einem ähnlichen Zusammenhang wird die Existenzwahrscheinlichkeit auch Konfidenz genannt.

In einem Schritt 245 kann ein Signal ausgegeben werden, falls die bestimmte Wahrscheinlichkeit einen vorbestimmten Schwellenwert überschreitet. Für unterschiedliche betrachtete Zeiträume können unterschiedliche Signale bereitgestellt werden. Das Signal kann in Abhängigkeit einer bestimmten Wahrscheinlichkeit verändert werden. Wurde ein bevorstehender Zeitpunkt des Losfahrens bestimmt, kann das Signal in Abhängigkeit einer bis zu diesem Zeitpunkt liegenden Zeitdauer verändert werden.

Bezugszeichen

100 System
105 Kraftfahrzeug
110 Personenverkehrsmittel
115 Fahrstraße
120 Haltestelle
125 Fahrgast
130 Steuervorrichtung

135     Abtasteinrichtung
140     Verarbeitungseinrichtung
145     Schnittstelle
150     Umfeld
155     erste Gruppe: einsteigende Fahrgäste
160     zweite Gruppe: aussteigende Fahrgäste

200     Verfahren
205     Abtasten Umfeld
210     Erfassen Personenverkehrsmittel
215     Bestimmen Bewegung
220     Erfassen Person
225     Bestimmen Bewegung
230     Bestimmen Gruppe
235     Bestimmen Bewegung
240     Bestimmen Wahrscheinlichkeit
245     Ausgeben Signal

**Patentansprüche**

1.  Verfahren (200) zum Steuern eines Kraftfahrzeugs (105), wobei das Verfahren (200) folgende Schritten aufweist: Abtasten (205) einer Umgebung des Kraftfahrzeugs (105); Erfassen (210) eines vor dem Kraftfahrzeug (105) haltenden Personenverkehrsmittels (110); Erfassen (225) einer Bewegung wenigstens einer Person im Bereich des Personenverkehrsmittels (110); Bestimmen (240) einer Wahrscheinlichkeit, mit der das Personenverkehrsmittel (110) vor dem Kraftfahrzeug (105) einschert, auf der Basis der Bewegung der Person.

2.  Verfahren (200) nach Anspruch 1 oder 2, wobei auf der Basis der Bewegung der Person bestimmt wird, dass die Person ein Fahrgast (125) des Personenverkehrsmittels (110) ist.

3.  Verfahren (200) nach Anspruch 2, wobei auf der Basis der Bewegung des Fahrgasts (125) bestimmt wird, ob der Fahrgast (125) in das Personenverkehrsmittel (110) zusteigt oder aus dem Personenverkehrsmittel (110) aussteigt; und wobei die Wahrscheinlichkeit auf der Basis dieser Information bestimmt wird.

4.  Verfahren (200) nach einem der vorangehenden Ansprüche, wobei die Wahrscheinlichkeit auf der Basis der mittleren Bewegung einer Gruppe zusteigender oder aussteigender Fahrgäste (125) bestimmt wird.

5.  Verfahren (200) nach Anspruch 4, wobei die Wahrscheinlichkeit auf der Basis von Bewegungen einer aussteigenden und einer zusteigenden Gruppe bestimmt wird.

6.  Verfahren (200) nach einem der Ansprüche 4 oder 5, wobei die Wahrscheinlichkeit auf der Basis einer Anzahl der von der Gruppe umfassten Personen bestimmt wird.

7.  Verfahren (200) nach einem der vorangehenden Ansprüche, wobei die Wahrscheinlichkeit zusätzlich auf der Basis einer beobachteten Haltedauer des Personenverkehrsmittels (110) bestimmt wird.

8.  Verfahren (200) nach einem der vorangehenden Ansprüche, wobei bestimmt wird, dass das Personenverkehrsmittel (110) an einer vorbestimmten Haltestelle hält.

9.  Verfahren (200) nach einem der vorangehenden Ansprüche, wobei die Wahrscheinlichkeit bezüglich eines vorbestimmten, bevorstehenden Zeitbereichs bestimmt wird.

10. Verfahren (200) nach einem der vorangehenden Ansprüche, wobei ein Signal ausgegeben wird, falls die bestimmte Wahrscheinlichkeit einen vorbestimmten Schwellenwert übersteigt.

11. Vorrichtung (130) zur Steuerung eines Kraftfahrzeugs (105), wobei die Vorrichtung folgendes umfasst: eine Abtasteinrichtung (135) zur Abtastung einer Umgebung (150) des Kraftfahrzeugs (105); und eine Verarbeitungseinrichtung (140), die dazu eingerichtet ist, ein vor dem Kraftfahrzeug (105) haltenden Personenverkehrsmittels (110) zu erfassen, eine Bewegung wenigstens einer Person im Bereich des Personenverkehrsmittels (110) zu erfassen, und auf der Basis der Bewegung des Fahrgasts (125) eine Wahrscheinlichkeit zu bestimmen, mit der das Personenverkehrsmittel (110) vor dem Kraftfahrzeug (105) einschert.

Fig. 1

Fig. 2

Europäisches
Patentamt

European
Patent Office

Office européen
des brevets

**EUROPÄISCHER RECHERCHENBERICHT**

Nummer der Anmeldung

EP 20 16 6010

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Anonymous: "Bus überholen: So geht's richtig", , 19. Dezember 2017 (2017-12-19), XP055723140, Gefunden im Internet: URL:https://www.adac.de/verkehr/recht/verkehrsvorschriften-deutschland/bus-ueberholen/ [gefunden am 2020-08-17] | 1-4,10, 11 | INV. G06K9/00 B60W30/08 B60W30/095 G08G1/16 |
| Y | * Seite 1 * | 5-9 | |
| Y | BILLONES ROBERT KERWIN C ET AL: "Vision-Based Passenger Activity Analysis System in Public Transport and Bus Stop Areas", 2018 IEEE 10TH INTERNATIONAL CONFERENCE ON HUMANOID, NANOTECHNOLOGY, INFORMATION TECHNOLOGY,COMMUNICATION AND CONTROL, ENVIRONMENT AND MANAGEMENT (HNICEM), IEEE, 29. November 2018 (2018-11-29), Seiten 1-6, XP033530045, DOI: 10.1109/HNICEM.2018.8666357 [gefunden am 2019-03-12] * Zusammenfassung * * Abbildungen 2,3,9,10 * | 5-9 | |
| A | MENG QIANG ET AL: "Bus dwell time estimation at bus bays: A probabilistic approach", TRANSPORTATION RESEARCH. PART C, EMERGING TECHNOLOGIES, Bd. 36, November 2013 (2013-11), Seiten 61-71, XP028765511, ISSN: 0968-090X, DOI: 10.1016/J.TRC.2013.08.007 * das ganze Dokument * | 1-11 | RECHERCHIERTE SACHGEBIETE (IPC) G06K |

-/--

Der vorliegende Recherchenbericht wurde für alle Patentansprüche erstellt

| Recherchenort | Abschlußdatum der Recherche | Prüfer |
|---|---|---|
| Den Haag | 18. August 2020 | Hermes, Lothar |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..........................................................................

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,P | JP 2019 197268 A (TOYOTA MOTOR CORP) 14. November 2019 (2019-11-14) * das ganze Dokument * ----- | 1-11 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 18. August 2020 | Hermes, Lothar |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 6010

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2020

| Im Recherchenbericht angeführtes Patentdokument | Datum der Veröffentlichung | Mitglied(er) der Patentfamilie | Datum der Veröffentlichung |
|---|---|---|---|
| JP 2019197268 A | 14-11-2019 | KEINE | |

Für nähere Einzelheiten zu diesem Anhang : siehe Amtsblatt des Europäischen Patentamts, Nr.12/82

EPO FORM P0461